# EUROPEAN PATENT APPLICATION

(11) **EP 3 783 683 A1**
(43) Date of publication of application: **24.02.2021**
(21) Application number: 19769979.6
(22) Date of filing: 30.07.2019
(51) Int. Cl.: H01M 2/02, H01M 2/08, H01M 10/058, H01M 10/04

(54) **SECONDARY BATTERY**

(30) Priority: 08.07.2019 CN 201921058265 U
(71) Applicant: Jiangsu Contemporary Amperex Technology Limited, Liyang, Jiangsu 213300 (CN)
(72) Inventor: The designation of the inventor has not yet been filed
(74) Representative: Manitz Finsterwald Patent- und Rechtsanwaltspartnerschaft mbB
(86) International application number: PCT/CN2019/098383
(87) International publication number: WO 2021/003781

(57) **Abstract**

The present invention provides a secondary battery, which comprises an electrode assembly and a pouch. The pouch comprises a first packaging film and a second packaging film, the second packaging film and the first packaging film are integrally formed, and the second packaging film extends from an edge of the first packaging film in a longitudinal direction and bends back to the first packaging film. The electrode assembly is provided between the first packaging film and the second packaging film. The first packaging film and the second packaging film are connected outside the electrode assembly to form a sealing portion, the sealing portion comprises a side sealing region and a bottom sealing region. The side sealing region is provided at an outer side of the electrode assembly in a transverse direction, and the side sealing region bends in a direction close to the electrode assembly. The bottom sealing region is provided at a side of the electrode assembly close to a position where the second packaging film bends back, and the bottom sealing region is connected with the side sealing region.

## Description

### FIELD OF THE PRESENT INVENTION

The present invention relates to the field of battery, and particularly relates to a secondary battery.

### BACKGROUND OF THE PRESENT INVENTION

With the rapid development of portable electronic equipment, the requirement on the energy density of the battery is higher and higher. In a secondary battery, it may use a pouch made of a packaging film (such as an aluminum-plastic film or a steel-plastic film) instead of a metal case, so as to reduce the weight of the battery and improve the energy density.

In known technology, it generally forms a cavity at a packaging film by stamping, then bends the packaging film to a two-layer structure. Except an edge where the two layers of the packaging film are directly connected, the other edges of the two layers of the packaging film will be heat pressed to form a sealing portion in the known technology, thereby making the two layers of the packaging film connected to form a pouch. The sealing portion occupies a larger space and influences the energy density of the secondary battery, so in the known technology, it generally bends the sealing portion to decrease the space occupied by the sealing portion. However, when bending the sealing portion, a stress concentrates to the edge where the two layers of the packaging film are directly connected at a region close to the sealing portion, which leads to a risk that the packaging film fractures.

### SUMMARY OF THE PRESENT INVENTION

In view of the problem existing in the background, an object of the present invention is to provide a secondary battery, which can improve energy density and promote sealing performance.

In order to achieve the above object, the present invention provides a secondary battery, which comprises an electrode assembly and a pouch. The pouch comprises a first packaging film and a second packaging film, the second packaging film and the first packaging film are integrally formed, and the second packaging film extends from an edge of the first packaging film in a longitudinal direction and bends back to the first packaging film. The electrode assembly is provided between the first packaging film and the second packaging film. The first packaging film and the second packaging film are connected outside the electrode assembly to form a sealing portion, the sealing portion comprises a side sealing region and a bottom sealing region. The side sealing region is provided at an outer side of the electrode assembly in a transverse direction, and the side sealing region bends in a direction close to the electrode assembly. The bottom sealing region is provided at a side of the electrode assembly close to a position where the second packaging film bends back, and the bottom sealing region is connected with the side sealing region.

In the longitudinal direction, an edge of the bottom sealing region away from the electrode assembly is flush with an edge of the pouch.

The bottom sealing region extends from the side sealing region; along a direction away from the side sealing region, a dimension of the bottom sealing region in the longitudinal direction decreases gradually.

The side sealing region is provided as two in number and the two side sealing regions are respectively positioned at two sides of the electrode assembly in the transverse direction. The bottom sealing region is provided as two in number, and each bottom sealing region is connected with one corresponding side sealing region. In the transverse direction, the two bottom sealing regions are spaced apart from each other.

A width of the bottom sealing region is smaller than a width of the side sealing region.

The side sealing region has a first crease line extending in the longitudinal direction, and the side sealing region bends along the first crease line and in a direction close to the electrode assembly. In the transverse direction, a distance between the first crease line and the bottom sealing region is 0.1mm∼2mm.

The side sealing region comprises a first region and a second region, the first region bends along the first crease line, the second region extends from an end portion of the first region and bends back to a side of the first region close to the electrode assembly.

The secondary battery further comprises an electrode lead, the electrode lead is connected with the electrode assembly and passes through the sealing portion. The electrode lead is provided as two in number, and the two electrode leads are positioned at one side of the electrode assembly away from the bottom sealing region.

The side sealing region is provided as two in number, and the two side sealing regions are respectively positioned at two sides of the electrode assembly in the transverse direction, two ends of the bottom sealing region in the transverse direction are respectively connected with the two side sealing regions.

Both of the first packaging film and the second packaging film comprise a protecting layer, a metal layer and a connecting layer, the connecting layer is provided on a surface of the metal layer facing the electrode assembly, the protecting layer is provided on a surface of the metal layer away from the electrode assembly. The connecting layer of the first packaging film is welded with the connecting layer of the second packaging film to form the sealing portion.

The present invention has the following beneficial effects: the side sealing region bends in a direction close to the electrode assembly, so as to decrease a dimension of the side sealing region in the transverse direction and improve the energy density of the secondary battery. By providing the bottom sealing region, it can increase the connecting strength between the first packaging film and the second packaging film, reduce the risk that the pouch fractures, and improve the sealing performance of the pouch.

### BRIEF DESCRIPTION OF THE DRAWINGS

FIG. 1 is a schematic view of an embodiment of a secondary battery according to the present invention.
FIG. 2 is a cross sectional view taken along a line A-A of the secondary battery of FIG. 1.
FIG. 3 is a cross sectional view taken along a line B-B of the secondary battery of FIG. 1.
FIG. 4 is schematic view of a pouch of FIG. 1 before formed.
FIG. 5 is a cross sectional view of a packaging film of the pouch of FIG. 4.
FIG. 6 is a schematic view of the secondary battery of FIG. 1 in the forming process.
FIG. 7 is an enlarged view of a part of the secondary battery of FIG. 6 within a round frame.
FIG. 8 is a cross sectional view taken along a line C-C of the secondary battery of FIG. 7.
FIG. 9 is a schematic view of another embodiment of the secondary battery according to the present invention.

### Reference numerals in figures are represented as follows:

- 1: electrode assembly
- 2: pouch
21 first packaging film
22 second packaging film
23 sealing portion
231 side sealing region
231a first region
231b second region
232 bottom sealing region
24 protecting layer
25 metal layer
26 connecting layer
- 3: electrode lead
- 4: insulating member
- L1: first crease line
- L2: second crease line
- L3: third crease line
- X: longitudinal direction
- Y: transverse direction
- Z: thickness direction

### DETAILED DESCRIPTION

To make the object, technical solutions and advantages of the present invention more apparent, hereinafter the present invention will be further described in detail in combination with the accompanying figures and the embodiments. It should be understood that the specific embodiments described herein are merely used to explain the present invention but are not intended to limit the present invention.

In the description of the present invention, unless otherwise specifically defined and limited, the terms "first", "second", and "third" are only used for illustrative purposes and are not to be construed as expressing or implying a relative importance. The term "plurality" is two or more. Unless otherwise defined or described, the term "connect" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present invention can be understood according to the specific situation.

In the description of the present invention, it should be understood that spatially relative terms, such as "above", "below" and the like, are described based on orientations illustrated in the figures, but are not intended to limit the embodiments of the present invention. Hereinafter the present invention will be further described in detail in combination with the exemplary embodiments and the figures.

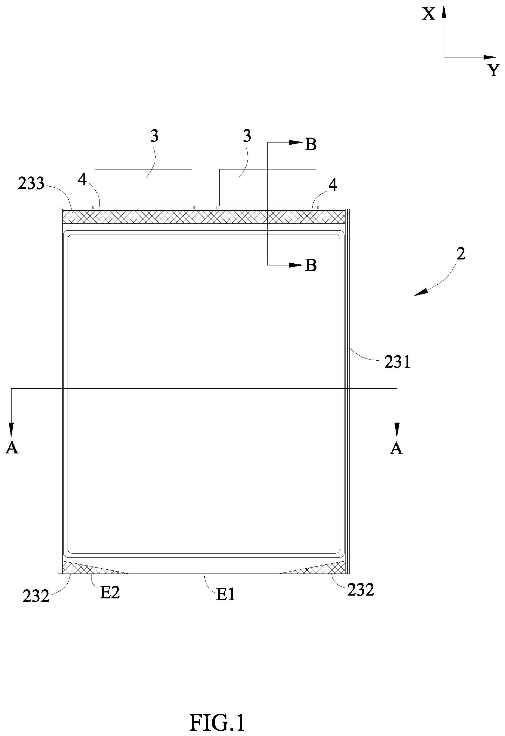

Referring to FIG. 1 to FIG. 3, in a first embodiment, a secondary battery of the present invention comprises an electrode assembly 1, a pouch 2, an electrode lead 3 and an insulating member 4.

The electrode assembly 1 is a core component of the secondary battery to realize the function of charge and discharge. The electrode assembly 1 comprises a positive electrode plate, a negative electrode plate and a separator, the separator separates the positive electrode plate and the negative electrode plate. The positive electrode plate comprises a positive current collector and a positive active material layer coated on a surface of the positive current collector, the positive current collector can be an aluminum foil, the positive active material layer comprises ternary material, lithium manganese oxide or lithium iron phosphate. The negative electrode plate comprises a negative current collector and a negative active material layer coated on a surface of the negative current collector, the negative current collector can be a copper foil, the negative active material layer comprises graphite or silicon.

The electrode assembly 1 is a wound structure. Specifically, the positive electrode plate and the negative electrode plate each are provided as one in number, the positive electrode plate and the negative electrode plate are belt-shaped structures. The positive electrode plate, the separator and the negative electrode plate are sequentially stacked and wound to two or more turns to form the electrode assembly 1. In the manufacturing process of the electrode assembly 1, the electrode assembly 1 is wound to a hollow cylindrical structure, and then the electrode assembly 1 is pressed to a flat shape after winding.

Alternatively, the electrode assembly 1 also may be a stacked structure. Specifically, the positive electrode plate is provided as plurality in number, the negative electrode plate is provided as plurality in number, the plurality of positive electrode plates and the plurality of the negative electrode plates are alternately stacked in a thickness direction Z, the separator separates the positive electrode plates and the negative electrode plates.

The pouch 2 comprises a first packaging film 21 and a second packaging film 22, the second packaging film 22 and the first packaging film 21 are integrally formed. The second packaging film 22 extends from an edge of the first packaging film 21 in a longitudinal direction X and bends back to the first packaging film 21. The second packaging film 22 and the first packaging film 21 may be arranged up and down in the thickness direction Z.

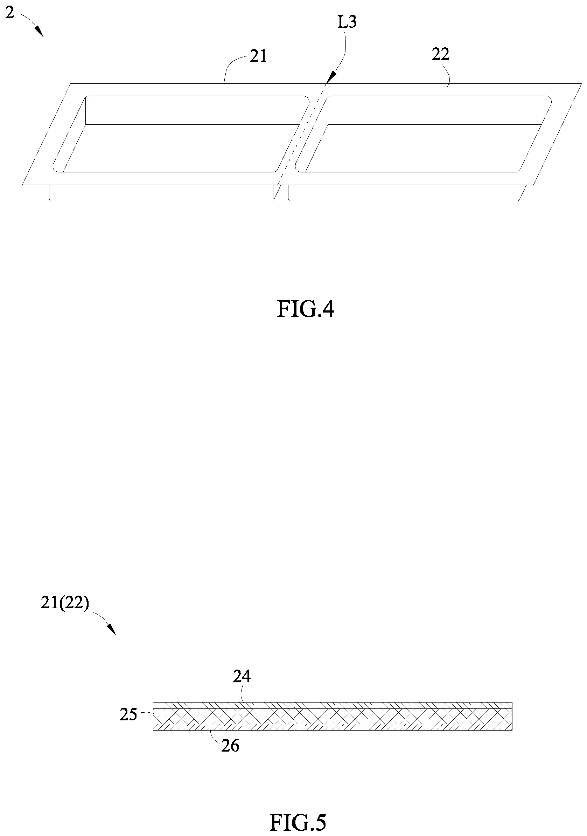

The first packaging film 21 and the second packaging film 22 may be formed by bending a piece of packaging film, such as aluminum-plastic film, steel-plastic film and the like. Specifically, referring to FIG. 4, it may forms two cavities at the piece of packaging film by stamping, then bend the piece of packaging film along a third crease line L3 to form two layers, that is, form the first packaging film 21 and the second packaging film 22 of the present invention. The two cavities are respectively formed at the first packaging film 21 and the second packaging film 22. The electrode assembly 1 is provided between the first packaging film 21 and the second packaging film 22; the two cavities form an inner cavity receiving the electrode assembly 1.

Referring to FIG. 5, both of the first packaging film 21 and the second packaging film 22 comprise a protecting layer 24, a metal layer 25 and a connecting layer 26, the protecting layer 24 and the connecting layer 26 are respectively provided at two sides of the metal layer 25. Specifically, the connecting layer 26 can be provided on a surface of the metal layer 25 facing the electrode assembly 1 via an adhesive; the protecting layer 24 can be provided on a surface of the metal layer 25 away from the electrode assembly 1 via an adhesive.

The material of the protecting layer 24 may be nylon or polyethylene terephthalate, the material of the metal layer 25 may be an aluminum foil or a steel foil, the material of the connecting layer 26 may be polypropylene.

The first packaging film 21 and the second packaging film 22 are connected outside the electrode assembly 1 to form a sealing portion 23. Specifically, by heat press, the connecting layer 26 of the first packaging film 21 is welded with the connecting layer 26 of the second packaging film 22 to form the sealing portion 23. The sealing portion 23 seals the inner cavity receiving the electrode assembly 1, thereby avoiding leakage of electrolyte.

In the process of heat press, the connecting layers 26 positioned at the sealing portion 23 are melted and compressed, therefore, after the process of heat press, a thickness of the sealing portion 23 is less than a sum of a thickness of the first packaging film 21 and a thickness of the second packaging film 22 before heat press.

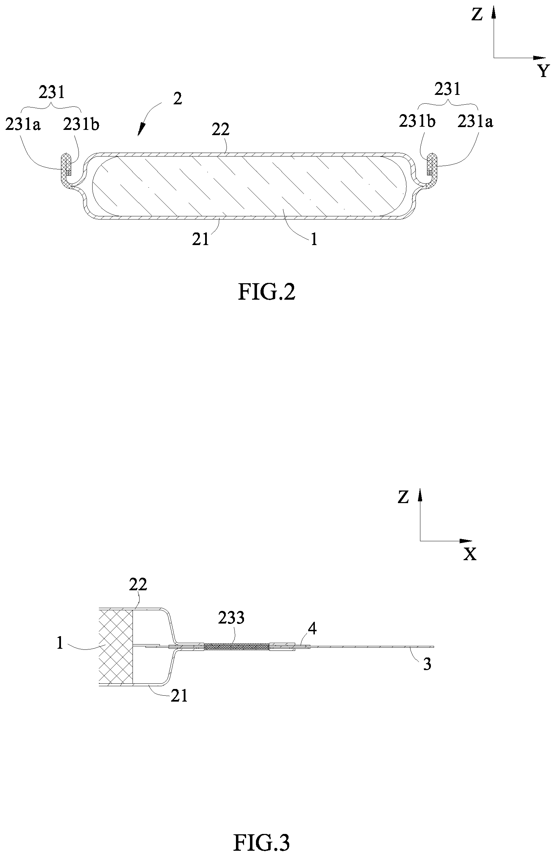

Referring to FIG. 3, the electrode lead 3 is connected with the electrode assembly 1, passes through the sealing portion 23 and extends to the outside of the pouch 2. Specifically, the electrode lead 3 may be provided as two in number, one electrode lead 3 is connected with the positive current collector of the positive electrode plate, the other electrode lead 3 is connected with the negative current collector of the negative electrode plate. The two electrode leads 3 connect the electrode assembly 1 and other components outside of the pouch 2, and in turn achieve the charge and discharge of the electrode assembly 1. The material of the electrode lead 3 may be aluminum, nickel or nickel-plated copper.

The electrode lead 3 passes through between the first packaging film 21 and the second packaging film 22. The connecting layer 26 is thinner, so the electrode lead 3 is easy to contact the metal layer 25, thereby leading to safety risk. Therefore the secondary battery of the present invention is preferably provided with the insulating member 4.

The insulating member 4 may be provided as two in number. The two insulating members 4 respectively separate the two electrode leads 3 and the sealing portion 23. Each insulating member 4 surrounds one corresponding electrode lead 3. A part of the insulating member 4 is clamped between the first packaging film 21 and the second packaging film 22, thereby separating the electrode lead 3 and the pouch 2, reduce the risk that the electrode lead 3 contacts the metal layer 25. The material of the insulating member 4 may be polypropylene.

A part of the insulating member 4 is clamped between the first packaging film 21 and the second packaging film 22, so in the process of heat press, the connecting layer 26 of the first packaging film 21 and the connecting layer 26 of the second packaging film 22 will be welded with the insulating member 4.

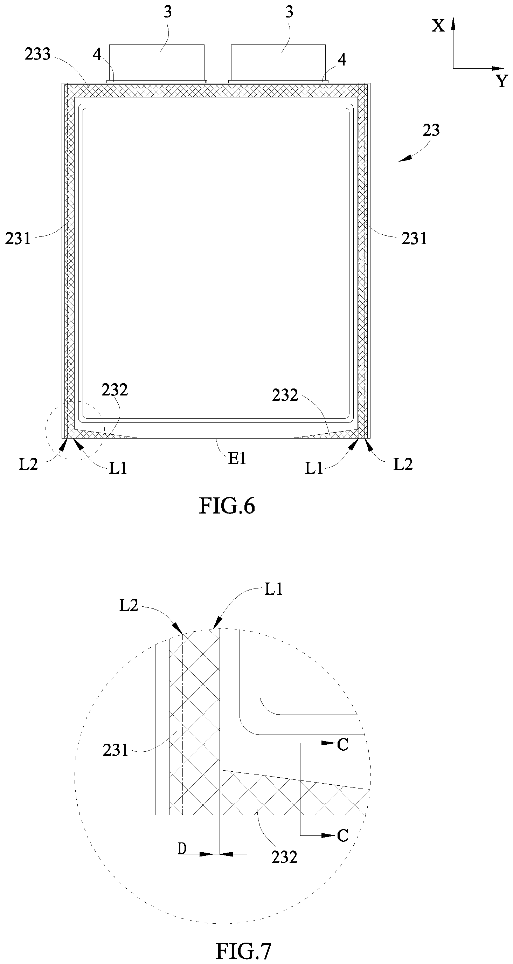

Referring to FIG. 1 and FIG. 6, the sealing portion 23 comprises a side sealing region 231 and a top sealing region 233, the side sealing region 231 is provided at an outer side of the electrode assembly 1 in a transverse direction Y, the top sealing region 233 is provided at a side of the electrode assembly 1 away from a position where the second packaging film 22 bends back.

The side sealing region 231 is provided as two in number and the two side sealing regions 231 are respectively provided at outer sides of the electrode assembly 1 in the transverse direction Y, the top sealing region 233 is provided at a side of the electrode assembly 1 in the longitudinal direction X and connected with the two side sealing regions 231. The two side sealing regions 231 and the top sealing region 233 form a U-shaped structure. An end of the first packaging film 21 away from the top sealing region 233 in the longitudinal direction X and an end of the second packaging film 22 away from the top sealing region 233 in the longitudinal direction X are directly connected, so the side sealing region 231 and the top sealing region 233 can seal the pouch 2.

Referring to FIG. 6, after the process of heat press, the side sealing region 231 has a certain width, which leads to a dimension of the secondary battery in the transverse direction Y larger, and influences the energy density of the secondary battery. Therefore, preferably, the side sealing region 231 bends in a direction close to the electrode assembly 1, so as to decrease a dimension of the side sealing region 231 in the transverse direction Y and improve the energy density of the secondary battery. After bending, a first crease line L1 is formed on the side sealing region 231 and extends in the longitudinal direction X; in other words, the side sealing region 231 bends along the first crease line L1 and in a direction close to the electrode assembly 1.

At an edge E1 of the pouch 2, the first packaging film 21 and the second packaging film 22 bend relative to each other; when bending the side sealing region 231, it will lead to the stress concentrating to a region of the edge E1 close to the first crease line LI; in other words, the region of the edge E1 close to the first crease line L1 is a stress concentration region.

In known technology, the first packaging film 21 and the second packaging film 22 are directly connected, so at a side of the electrode assembly 1 away from the top sealing region 23, the first packaging film 21 and the second packaging film 22 will not be connected by heat press. In other words, between the two side sealing regions 231, the connecting layer 26 of the first packaging film 21 and the connecting layer 26 of the second packaging film 22 are not welded, the connecting strength between the first packaging film 21 and the second packaging film 22 is lower.

When the secondary battery is subject to impact, the unwelded portion between the first packaging film 21 and the second packaging film 22 and close to the stress concentration region is easy to fracture, thereby leading to the leakage of electrolyte and resulting in safety risk.

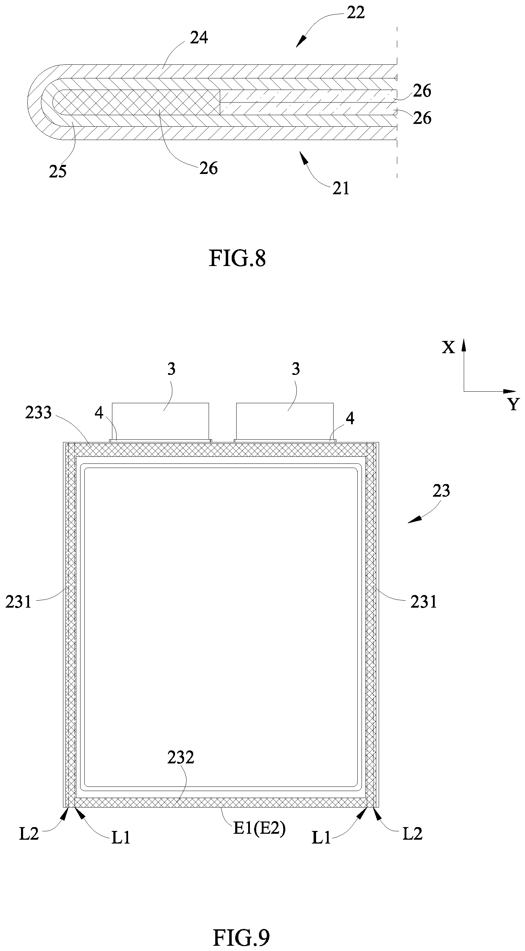

Therefore, the sealing portion 23 of the present invention further comprises a bottom sealing region 232, the bottom sealing region 232 is provided at a side of the electrode assembly 1 close to a position where the second packaging film 22 bends back, and the bottom sealing region 232 is connected with the side sealing region 231. Referring to FIG. 8, at the bottom sealing region 232, the connecting layer 26 of the first packaging film 21 and the connecting layer 26 of the second packaging film 22 are welded together.

By providing the bottom sealing region 232, it can increase the connecting strength between the first packaging film 21 and the second packaging film 22 close to the stress concentration region, reduce the risk that the pouch 2 fractures, and improve the sealing performance of the pouch 2.

When bending the side sealing region 231, the stress concentration region is positioned at the edge E1 of the pouch 2, in other words, the risk that the edge E1 of the pouch 2 fractures is highest. Therefore, preferably, in the longitudinal direction X, an edge E2 of the bottom sealing region 232 away from the electrode assembly 1 is flush with the edge E1 of the pouch 2, this can reduce the risk of fracture as far as possible. Meanwhile, even though the pouch 2 fractures at the edge E1, the bottom sealing region 232 still can have a function of sealing and avoid the leakage of electrolyte. In addition, on the premise that the width of the bottom sealing region 232 is consistent, if the edge E2 of the bottom sealing region 232 is not flush with the edge E1 of the pouch 2, the bottom sealing region 232 will occupy the inner space of the pouch 2 and influence capacity of the secondary battery.

Referring to FIG. 1, FIG. 6 and FIG. 7, the bottom sealing region 232 extends from the side sealing region 231; along a direction away from the side sealing region 231, a dimension of the bottom sealing region 232 in the longitudinal direction X decreases gradually. The farther the pouch 2 is distant from the side sealing region 231, the smaller stress the pouch 2 is subject to, and the lower the risk that the pouch 2 fractures is. Therefore, along the direction away from the side sealing region 231, even if the dimension of the bottom sealing region 232 in the longitudinal direction X gradually decreases, it still can ensure the sealing performance. In addition, when the dimension of the bottom sealing region 232 in the longitudinal direction X decreases, it can increase the inner space of the pouch 2 and improve the capacity of the secondary battery.

Preferably, the bottom sealing region 232 is provided as two in number, and each bottom sealing region 232 is connected with one corresponding side sealing region 231; in the transverse direction Y, the two bottom sealing regions 232 are spaced apart from each other. In the normal working process of the secondary battery, the electrode assembly 1 also will release a small amount of gas; in the final stage of the cycle-life of the secondary battery, a certain amount of gas will exist inside the pouch 2, so when designing the secondary battery, it will reserve a certain space for receiving the gas generated by the electrode assembly 1. Between the two bottom sealing regions 232, the first packaging film 21 and the second packaging film 22 are unwelded, the generated gas can separate the first packaging film 21 and the second packaging film 22, and be stored between the first packaging film 21 and the second packaging film 22. In other words, the present invention can further increase the inner space of the pouch 2 and improve the capacity of the secondary battery.

Referring to FIG. 6, a width of the bottom sealing region 232 is smaller than a width of the side sealing region 231. In addition, the width of the side sealing region 231 refers to the width of the side sealing region 231 before bending, in other words, refers to the width of the side sealing region 231 in a spread state. The width of the bottom sealing region 232 refers to a dimension of the bottom sealing region 232 in the longitudinal direction X, the width of the side sealing region 231 refers to a dimension of the side sealing region 231 in the transverse direction Y.

The values of the widths decide the sealing strength of the bottom sealing region 232 and the sealing strength of the side sealing region 231. Near the bottom sealing region 232, the first packaging film 21 and the second packaging film 22 are directly connected, the pouch 2 still has a certain sealing strength even if the bottom sealing region 232 is not provided, so the bottom sealing region 232 can has a relatively smaller width. In addition, by decreasing the width of the bottom sealing region 232, it can increase the inner space of the pouch 2 and improve the capacity of the secondary battery.

Referring to FIG. 7, in the transverse direction Y, a distance between the first crease line L1 and the bottom sealing region 232 is D. The smaller the value of D is, the larger force the bottom sealing region 232 is subject to when bending the side sealing region 231. The greater the value of D is, the larger space the side sealing region 231 occupies in the transverse direction Y after bending. Therefore, preferably, the value of D is 0.1mm∼2mm.

Referring to FIG. 2, the side sealing region 231 comprises a first region 231a and a second region 231b, the first region 231a bends along the first crease line LI, the second region 231b extends from an end portion of the first region 231a and bends back to a side of the first region 231a close to the electrode assembly 1. Referring to FIG. 6, in the forming process of the secondary battery, it can bend the side sealing region 231 along the second crease line L2 firstly, two parts respectively positioned at two sides of the second crease line L2 are the first region 231a and the second region 231b; then it can bend the first region 231a along the first crease line L1.

In the forming process, the first packaging film 21 and the second packaging film 22 need to be cut; at a section formed by cut, the metal layer 25 exposes. The exposed metal layer 25 is easy to be corroded, which may result in a risk of short circuit. In the present invention, by bending the side sealing region 231 twice, it can clamp a part of the exposed metal layer 25 between the first region 231a and a wall of the cavity, thereby decreasing expose of the metal layer 25 and reducing the risk of short circuit. In the transverse direction Y, a surface of the second region 231b close to the electrode assembly 1 is bonded with the wall of the cavity, a surface of the second region 231b away from the electrode assembly 1 is bonded with the first region 231a.

In the present invention, two electrode leads 3 are positioned at one side of the electrode assembly 1 away from the bottom sealing region 232. In other words, the two electrode leads 3 extend in the longitudinal direction X and pass through the top sealing region 233.

Hereinafter a second embodiment of the secondary battery of the present invention will be described. In order to simplify description, hereinafter only the differences between the second embodiment and the first embodiment are described in detail, the undescribed part can be understood referring to the first embodiment.

Referring to FIG. 9, in the second embodiment, the side sealing region 231 is provided as two in number, and the two side sealing regions 231 are respectively positioned at two sides of the electrode assembly 1 in the transverse direction Y, two ends of the bottom sealing region 232 in the transverse direction Y are respectively connected with the two side sealing regions 231. Compared to the first embodiment, the second embodiment can simplify the heat press process and reduce the requirement of the heat press device.

## Claims

1. A secondary battery, comprising an electrode assembly (1) and a pouch (2);
the pouch (2) comprising a first packaging film (21) and a second packaging film (22), the second packaging film (22) and the first packaging film (21) being integrally formed, and the second packaging film (22) extending from an edge of the first packaging film (21) in a longitudinal direction (X) and bending back to the first packaging film (21);
the electrode assembly (1) being provided between the first packaging film (21) and the second packaging film (22);
the first packaging film (21) and the second packaging film (22) being connected outside the electrode assembly (1) to form a sealing portion (23), the sealing portion (23) comprising a side sealing region (231) and a bottom sealing region (232);
the side sealing region (231) being provided at an outer side of the electrode assembly (1) in a transverse direction (Y), and the side sealing region (231) bending in a direction close to the electrode assembly (1);
the bottom sealing region (232) being provided at a side of the electrode assembly (1) close to a position where the second packaging film (22) bends back, and the bottom sealing region (232) being connected with the side sealing region (231).

2. The secondary battery according to claim 1, wherein, in the longitudinal direction (X), an edge of the bottom sealing region (232) away from the electrode assembly (1) is flush with an edge of the pouch (2).

3. The secondary battery according to claim 1 or 2, wherein
the bottom sealing region (232) extends from the side sealing region (231);
along a direction away from the side sealing region (231), a dimension of the bottom sealing region (232) in the longitudinal direction (X) decreases gradually.

4. The secondary battery according to claim 3, wherein
the side sealing region (231) is provided as two in number and the two side sealing regions (231) are respectively positioned at two sides of the electrode assembly (1) in the transverse direction (Y);
the bottom sealing region (232) is provided as two in number, and each bottom sealing region (232) is connected with one corresponding side sealing region (231);
in the transverse direction (Y), the two bottom sealing regions (232) are spaced apart from each other.

5. The secondary battery according to claim 1, wherein a width of the bottom sealing region (232) is smaller than a width of the side sealing region (231).

6. The secondary battery according to claim 1, wherein
the side sealing region (231) has a first crease line (L1) extending in the longitudinal direction (X), and the side sealing region (231) bends along the first crease line (L1) and in a direction close to the electrode assembly (1);
in the transverse direction (Y), a distance between the first crease line (L1) and the bottom sealing region (232) is 0.1mm∼2mm.

7. The secondary battery according to claim 6, wherein the side sealing region (231) comprises a first region (231a) and a second region (231b), the first region (231a) bends along the first crease line (L1), the second region (231b) extends from an end portion of the first region (231a) and bends back to a side of the first region (231a) close to the electrode assembly (1).

8. The secondary battery according to claim 1, wherein
the secondary battery further comprises an electrode lead (3), the electrode lead (3) is connected with the electrode assembly (1) and passes through the sealing portion (23);
the electrode lead (3) is provided as two in number, and the two electrode leads (3) are positioned at one side of the electrode assembly (1) away from the bottom sealing region (232).

9. The secondary battery according to claim 1, wherein the side sealing region (231) is provided as two in number, and the two side sealing regions (231) are respectively positioned at two sides of the electrode assembly (1) in the transverse direction (Y), two ends of the bottom sealing region (232) in the transverse direction (Y) are respectively connected with the two side sealing regions (231).

10. The secondary battery according to claim 1, wherein
both of the first packaging film (21) and the second packaging film (22) comprise a protecting layer (24), a metal layer (25) and a connecting layer (26), the connecting layer (26) is provided on a surface of the metal layer (25) facing the electrode assembly (1), the protecting layer (24) is provided on a surface of the metal layer (25) away from the electrode assembly (1);
the connecting layer (26) of the first packaging film (21) is welded with the connecting layer (26) of the second packaging film (22) to form the sealing portion (23).
